## Europäisches Patentamt

## European Patent Office

## Office européen des brevets

(19)

(11) Veröffentlichungsnummer: **0 235 710**
**A2**

(12) **EUROPÄISCHE PATENTANMELDUNG**

(21) Anmeldenummer: **87102476.6**

(22) Anmeldetag: **21.02.87**

(51) Int. Cl.⁴: **B05C 17/00**

(30) Priorität: **25.02.86 DE 3606001**

(43) Veröffentlichungstag der Anmeldung:
**09.09.87 Patentblatt 87/37**

(84) Benannte Vertragsstaaten:
**AT BE CH DE ES FR GB IT LI NL SE**

(71) Anmelder: **DETEC KUNSTSTOFFTECHNIK GMBH**
**Breslauer Strasse 3**
**D-6080 Gross-Gerau(DE)**

(72) Erfinder: **Geyer, Ferdinand**
**An den Dreissigruten 72**
**D-6087 Büttelborn 2(DE)**
Erfinder: **Zipf, Eckart**
**Göttelmannstrasse 42a**
**D-6500 Mainz(DE)**

(74) Vertreter: **Katscher, Helmut, Dipl.-Ing.**
**Bismarckstrasse 29**
**D-6100 Darmstadt(DE)**

(54) **Dosier- und Mischpistole für Mehrkomponenten-Kunststoffe.**

(57) Eine Dosier-und Mischpistole für Mehrkomponenten-Kunststoffe dient dazu, die Materialkomponenten aus Kartuschen (1, 2) über gesonderte Zuleitungskanäle (12, 13) durch eine Statik-Mischdüse (18) zu pressen. In einem der Zuleitungskanäle (13) ist eine Drosseleinrichtung vorgesehen, beispielsweise eine mehr oder weniger in den Zuleitungskanal (13) einschraubbare Stellschraube (21). Der durch die Drosselung im Zuleitungskanal (13) erzielte, erhöhte Staudruck führt zu einer Erhöhung der Kolbenkraft in derjenigen Kartusche (2), die die Materialkomponente mit der niedrigeren Viskosität enthält. Dadurch können trotz unterschiedlicher Materialviskositäten in beiden Kartuschen (1, 2) gleiche Kolbenkräfte eingestellt und ein Vorlaufen der niedrigerviskosen Materialkomponente vermieden werden.

FIG. 1

## Dosier-und Mischpistole für Mehrkomponenten-Kunststoffe

Die Erfindung betrifft eine Dosier-und Mischpistole für Mehrkomponenten-Kunststoffe, deren Materialkomponenten aus mindestens einer Kartusche mittels Schubkolben auspreßbar sind, mit jeweils einem jede Kartusche bzw. jede Kartuschenkammer mit einem gemeinsamen Mischraum am Eingang einer Statik-Mischdüse verbindenden Zuleitungskanal.

Derartige Dosier-und Mischpistolen sind in Ausführungen mit mehreren, vorzugsweise zwei, Einkammer-Kartuschen sowie mit einer Mehrkammer-Kartusche, insbesondere Koaxialkammerkartusche, bekannt (DE-GM 85 15 391, DE-OS 29 18 121).

Die sich an den gemeinsamen Mischraum anschließenden Statik-Mischdüsen weisen üblicherweise ein Mischrohr auf, in dem ein aus mehreren Mischkörpern bestehender statischer Mischeinsatz angeordnet ist (DE-OS 32 08 462).

Beim Einsatz derartiger Dosier-und Mischpistolen ergeben sich Schwierigkeiten dadurch, daß die auszupressenden Materialkomponenten in vielen Fällen sehr unterschiedliche Viskositäten aufweisen. Bei der Verwendung mehrerer Einkammerkartuschen, die jeweils einen gesonderten Schubkolben mit zugeordneter Schubstange aufweisen, führen diese unterschiedlichen Materialviskositäten dazu, daß die aufzuwendenden Kolbenkräfte sehr unterschiedlich sind.

Die unterschiedlichen Viskositäten der auszupressenden Materialkomponenten führen dazu, daß zu Beginn des Auspreßvorgangs die niedrigerviskose Materialkomponente früher in den Mischraum und in die Mischdüse eintritt als die höherviskose Materialkomponente. Dies bedingt am Anfang des Auspreßvorganges eine ungleichmäßige Dosierung der beiden Materialkomponenten.

Aufgabe der Erfindung ist es daher, eine Dosier-und Mischpistole der eingangs genannten Gattung so auszubilden, daß die durch die unterschiedlichen Materialviskositäten bedingten Schwierigkeiten weitestgehend ausgeschlossen werden. Diese Aufgabe wird erfindungsgemäß dadurch gelöst, daß in mindestens einer der Zuleitungskanäle eine Drosseleinrichtung vorgesehen ist.

Durch diese Drosseleinrichtung werden die Strömungsgeschwindigkeit und damit der vor der Drosselstelle auftretende Staudruck verändert. Mit dieser Maßnahme ist eine Möglichkeit gegeben, diesen Staudruck, der sich im wesentlichen in gleicher Höhe auch in der zugeordneten Kartuschenkammer bzw. Kartusche aufbaut, so zu wählen, daß -bei Einkammerkartuschen -die an beiden Schubkolben aufzubringenden Kolbenkräfte gleich sind. bzw. daß bei einer Koaxialkartusche ein gleichmäßiger Materialeintritt in den Mischraum zu Beginn des Auspreßvorganges sichergestellt ist.

Vorzugsweise ist der Drosselquerschnitt der Drosseleinrichtung veränderbar. Damit wird die Möglichkeit zur Anpassung an unterschiedliche Materialviskositäten geschaffen. Hierfür ist bei einer Dosier-und Mischpistole, die einen Pistolenkopf mit die Zuleitungskanäle bildenden Bohrungen aufweist, in Weiterbildung des Erfindungsgedankens vorgesehen , daß die Drosseleinrichtung einen im Pistolenkopf beweglich gelagerten Drosselkörper aufweist, der teilweise in mindestens eine der die Zuleitungskanäle bildenden Bohrungen reicht. Der Drosselkörper kann in konstruktiv sehr einfacher Ausführungsform eine Stellschraube sein, die mit ihrer Spitze teilweise in die Bohrung reicht.

Statt dessen ist es auch möglich, die Drosseleinrichtung durch eine auswechselbare Blende im Zuleitungskanal oder durch eine Drosselbohrung im Mundstück einer Kartusche zu bilden. Hierfür kann am Mundstück der Kartuschen ein die Drosselbohrung bzw. Drosselbohrungen aufweisender Einsatz angebracht sein. Die Anordnung der Drosselbohrung im bzw. am Mundstück der Kartusche hat den Vorteil, daß der an die jeweilige Materialviskosität angepaßte Drosselquerschnitt bereits an der Kartusche eingestellt ist.

Die Erfindung wird nachfolgend an Ausführungsbeispielen näher erläutert, die in der Zeichnung dargestellt sind. Es zeigt:

Fig. 1 eine Dosier-und Mischpistole für MehrkomponentenKunststoffe in einer Draufsicht und teilweise im Schnitt,

Fig. 2 eine vergrößerte Stirnansicht des Pistolenkopfes der Dosier-und Mischpistole nach Fig. 1,

Fig. 3 einen noch stärker vergrößerten Teilschnitt längs der Linie III-III in Fig. 1,

Fig. 4 einen Teilschnitt durch eine Kartusche,

Fig. 5 einen Teilschnitt durch eine Kartusche nach einer anderen Ausführungsform und

Fig. 6 einen Teilschnitt durch eine Kartusche mit zwei Koaxialkammern.

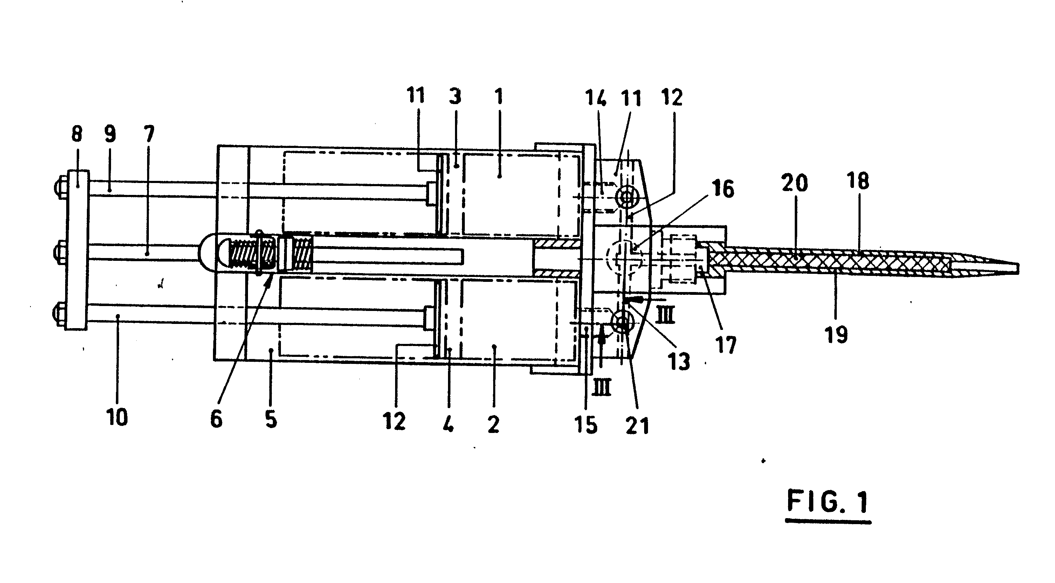

Die in Fig. 1 gezeigte Dosier-und Mischpistole ist als Handgerät ausgeführt, das auch in einem Stativ aufgenommen werden kann. Sie dient zur Bearbeitung von Zweikomponenten-Kunststoff, beispielsweise Epoxidharz oder Polyurethan, dessen Materialkomponenten in zwei Kartuschen 1,2 enthalten sind. Die Kartuschen 1,2, die in der Zeichnung nur mit strichpunktierten Linien angedeutet sind, enthalten jeweils einen Kartuschenkolben 3 bzw. 4. Die beiden Kartuschen 1,2 sind in einem gemeinsamen Pistolengehäuse 5 nebeneinander auswechselbar aufgenommen.

Mittels eines gemeinsamen Schubstangenantriebs 6, der durch einen Betätigungshandgriff oder einen pneumatischen Antrieb (nicht dargestellt) betätigbar ist, kann eine zentrale Antriebsschubstange 7 nach vorn bewegt werden, die an ihrem hinteren Ende über ein Joch 8 mit zwei nebeneinander im Pistolengehäuse 5 geführten Schubstangen 9, 10 verbunden ist. Stattdessen kann -ohne zentrale Antriebsschubstange -ein direkter Antrieb der Schubstangen 9, 10 erfolgen. Jede Schubstange 9, 10 trägt an ihrem vorderen Ende jeweils einen Schubkolben 11, 12, der jeweils mit dem zugeordneten Kartuschenkolben 3 bzw. 4 in Einoriff tritt und diesen nach vorn schiebt.

An ihren vorderen Enden sind die Kartuschen 1, 2 in einen mit dem Pistolengehäuse 5 verbundenen Pistolenkopf 11 aufgenommen. Jeweils ein gesonderter Zuleitungskanal 12 bzw. 13 führt im Pistolenkopf 11 von jeder Austrittsdüse 14 bzw. 15 der Kartuschen 1 bzw. 2 über einen gemeinsamen, die Materialkomponenten trennenden Hahn 16 zu einem gemeinsamen Mischraum 17. An den Mischraum 17 schließt sich eine Statik-Mischdüse 18 an, die in einem Düsenrohr 19 einen Statik-Mischeinsatz 20 enthält. Der Mischraum 17 und die Mischdüse 18 mit dem Düsenrohr 19 und dem Mischeinsatz 20 bilden eine auswechselbare Einheit.

In dem einen Zuleitungskanal 13, durch den die niedrigerviskose Materialkomponente fließt, ist eine einstellbare Drosseleinrichtung vorgesehen, die bei dem Ausführungsbeispiel nach den Fig. 1 - 3 durch eine Stellschraube 21 gebildet wird, die mit ihrer Spitze 22 in den Zuleitungskanal 13 reicht, der ebenso wie der Zuleitungskanal 12 durch Bohrungen im Pistolenkopf 11 gebildet wird. Durch Verstellung der Stellschraube 21 kann der Durchlaßquerschnitt im Zuleitungskanal 13 mehr oder weniger gedrosselt werden. Dadurch wird der sich vor der Drosselstelle aufbauende Staudruck verändert, der so im wesentlichen dem Druck in der Kartusche 1 angeglichen werden kann.

Bei dem dargestellten Ausführungsbeispiel enthält die Kartusche 2 das Material mit der niedrigeren Viskosität. Durch Einstellung der Drosseleinrichtung kann der Staudruck in der Kartusche 2 dem Druck, der sich in der anderen Kartusche 1 aufbaut, annähernd angeglichen werden. Dadurch wird eine gleichmäßige Belastung der Schubstangen 9, 10 erreicht und zugleich ein Vorlaufen der niedrigerviskosen Materialkomponente verhindert.

Anstelle der in den Fig. 1 -3 gezeigten Ausführung der Drosseleinrichtung mit der Stellschraube 21 als Drosselkörper können auch andere Drosselkörper verwendet werden, die den Querschnitt der Zuleitungskanäle 12 bzw. 13 einstellbar verändern. Als Drosselkörper können beispielsweise auswechselbare Blenden im Zuleitungskanal 12 bzw. 13 eingesetzt werden. Auch das Hahnküken des gemeinsamen Hahnes 16 für beide Zuleitungskanäle 12, 13 kann als Drosselkörper dienen, wobei die Bohrungen im Hahnküken mit der jeweils gewünschten Querschnittsfläche ausgeführt werden.

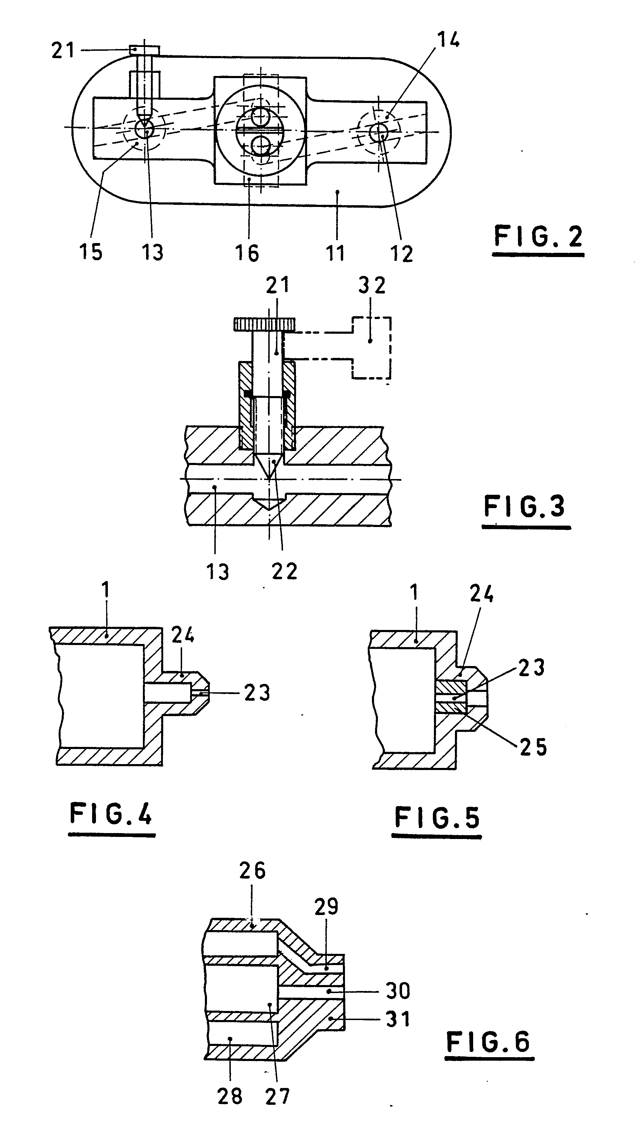

Eine andere Möglichkeit besteht darin, die Drosseleinrichtung bereits an der Kartusche 1 bzw. 2 vorzusehen. Wie in Fig. 4 gezeigt, wird die Drosseleinrichtung durch eine Drosselbohrung 23 im Mundstück 24 der Kartusche 1 gebildet. Durch diese Maßnahme wird erreicht, daß der an die Viskosität der jeweiligen Materialkomponente angepaßte Drosselquerschnitt automatisch schon beim Einsetzen der Kartusche 1 vorgegeben wird, so daß keine weiteren Einstellmaßnahmen erforderich sind. Beispielsweise werden die Kartuschen bei sonst gleichbleibenden Abmessungen mit unterschiedlichen Bohrungsquerschnitten der Drosselbohrung 23 für die Materialkomponenten unterschiedlicher Viskosität ausgeführt.

In Fig. 5 ist gezeigt, daß die Drosselbohrung 23 im Mundstück 24 der Kartusche 1 auch durch einen Einsatz 25 gebildet werden kann. Hierbei besteht der Vorteil, daß alle Kartuschen unabhängig von der Viskosität der aufzunehmenden Materialkomponente gleich ausgeführt werden können, wobei nur vor dem Befüllen unterschiedliche, an die Viskosität der jeweiligen Materialkomponente angepaßte Einsätze 25 eingesetzt werden.

Fig. 6 zeigt die Anwendung des Erfindungsgedankens bei einer Koaxialkartusche 26, die zwei koaxial zueinander angeordnete Kartuschenkammern 27 und 28 aufweist. Hierbei sind Drosselbohrungen 29, 30 mit unterschiedlicher Querschnittsfläche im Mundstück 31 der Kartusche 26 vorgesehen. Der Drosselquerschnitt in der für die Materialkomponente mit der niedrigeren Viskosität vorgesehenen Drosselbohrung 29 ist so gewählt, daß die aus den Bohrungen 29 und 30 austretenden Materialstränge gleichmäßig schnell zum Mischraum 17 fließen und somit gleichmäßig in die Mischdüse 18 eintreten. Dadurch wird eine unzureichende Durchmischung am Anfang des Auspreßvorgangs verhindert.

Die Einstellung der verstellbaren Drosseleinrichtungen kann nach einer Skala oder nach Lehren erfolgen. Beispielsweise kann die in Fig. 3 gezeigte Stellschraube 21 jeweils mittels einer Lehre 32 eingestellt werden, die mit strichpunktierten Linien angedeutet ist. Für Materialkomponenten unterschiedlicher Viskosität werden unterschiedliche Lehren 32 vorgesehen, durch die jeweilige Drosseleinstellung vorgegeben ist. Statt dessen ist es beispielsweise auch möglich, am Kopf der Wendelschraube 21 und/oder am Pistolenkopf 11 Markierungen für die jeweiligen Drosselstellungen vorzusehen.

## Ansprüche

1. Dosier-und Mischpistole für Mehrkomponenten-Kunststoffe, deren Materialkomponenten aus mindestens einer Kartusche mittels Schubkolben auspreßbar sind, mit jeweils einem jede Kartusche bzw. jede Kartuschenkammer mit einem gemeinsamen Mischraum am Eingang einer Statik-Mischdüse verbindenden Zuleitungskanal, dadurch gekennzeichnet, daß in mindestens einem der Zuleitungskanäle (12 bzw. 13) eine Drosseleinrichtung (21, 22; 23; 29) vorgesehen ist.

2. Dosier-und Mischpistole nach Anspruch 1, dadurch gekennzeichnet, daß der Drosselquerschnitt der Drosseleinrichtung (21, 22) veränderbar ist.

3. Dosier-und Mischpistole mit einem Pistolenkopf, der die Zuleitungskanäle bildende Bohrung aufweist, dadurch gekennzeichnet, daß die Drosseleinrichtung einen im Pistolenkopf (11) beweglich gelagerten Drosselkörper (21) aufweist, der teilweise in mindestens eine der die Zuleitungskanäle - (12, 13) bildenden Bohrungen reicht.

4. Dosier-und Mischpistole nach Anspruch 3, dadurch gekennzeichnet, daß der Drosselkörper eine mit ihrer Spitze (22) teilweise in die Bohrung reichende Stellschraube (21) ist.

5. Dosier-und Mischpistole nach Anspruch 1, dadurch gekennzeichnet, daß die Drosseleinrichtung eine auswechselbare Blende im Zuleitungskanal (12 bzw. 13) aufweist.

6. Dosier-und Mischpistole nach Anspruch 1, dadurch gekennzeichnet, daß die Drosseleinrichtung durch mindestens eine Drosselbohrung (23, 29) im Mundstück (24, 31) einer Kartusche (1, 26) gebildet wird.

7. Dosier-und Mischpistole nach Anspruch 6, dadurch gekennzeichnet, daß am Mundstück (24) der Kartusche (1) ein die Drosselbohrung (23) bzw. Drosselbohrungen aufweisender Einsatz (25) angebracht ist.

8. Dosier-und Mischpistole nach Anspruch 6 oder 7, dadurch gekennzeichnet, daß die unterschiedlichen Drosselbohrungen (23, 29) durch thermoplastische Verformung des Mundstücks - (24) oder des Einsatzes (25) gebildet sind.

FIG. 1

FIG.2

FIG.3

FIG.4

FIG.5

FIG.6